# EUROPEAN PATENT APPLICATION

(11) **EP 3 406 467 A1**
(43) Date of publication of application: **28.11.2018**
(21) Application number: 17382303.0
(22) Date of filing: 26.05.2017
(51) Int. Cl.: B60G 7/04, F16B 21/18

(54) **SHOCK ABSORBER ASSEMBLY OF A SUSPENSION SYSTEM OF A VEHICLE**

(71) Applicant: Cikautxo, S. Coop., 48710 Berriatua (Vizcaya) (ES)
(72) Inventor: CELAYA ARRIZABALAGA, Asier, 20808 GETARIA (ES); AZPIAZU ECHAVE, Iñaki, 48270 MARKINA - XEMEIN (ES); JUARISTI LARRINAGA, Gotzon, 48270 MARKINA - XEMEIN (ES)
(74) Representative: Igartua, Ismael

(57) **Abstract**

Suspension system of a vehicle and shock absorber assembly (100) of said suspension system, said shock absorber assembly (100) comprising a top mount (4) and a jounce bumper (1). The jounce bumper (1) comprises a main body (2) manufactured in an elastic material and a fixing element (3) manufactured in a second material harder than the former. The jounce bumper (1) is removably attached to the top mount (4) through a movable retaining element (5) housed in the fixing element (3), retaining said fixing element (3) in the top mount (4) in a first locking position and releasing said jounce bumper (1) in a second unlocking position.

## Description

### TECHNICAL FIELD

The present invention relates to suspension systems, and more specifically to shock absorber assemblies comprised in said suspension systems which damp and absorb the irregularities of the terrain on which the vehicle is traveling.

### PRIOR ART

Vehicles, such as cars, trucks, motorcycles, etc., are equipped with a suspension system which is made up of an assembly of elements which absorb irregularities of the terrain on which the vehicle is traveling in order to increase vehicle comfort and control. The suspension system acts between the chassis and the wheels, which directly receive the irregularities of the surface being traveled on.

A suspension system usually comprises a shock absorber, with its corresponding rod or shaft, and there being assembled in said rod, for example, a spring, a top mount for attaching the suspension system to the vehicle chassis, and a compressible jounce bumper for absorbing vibrations and irregularities of the terrain, recovering its initial shape once irregularities of the terrain or vibrations have ceased.

EP3070364 A1 discloses a shock absorber assembly for a suspension system of a vehicle comprising a top mount and a jounce bumper. The jounce bumper comprises a main body and a fixing element. The main body is manufactured in an elastic material and the fixing element in a material harder than the former. The jounce bumper is fixed to the top mount through two flange-like elastic retaining areas arranged in the fixing element cooperating with a respective protuberance arranged in the top mount.

### DISCLOSURE OF THE INVENTION

The object of the invention is to provide a shock absorber assembly of a suspension system of a vehicle and said suspension system, as defined in the claims.

The shock absorber assembly of the invention comprises a top mount and a jounce bumper comprising a main body manufactured in an elastic material and a fixing element manufactured in a second material that is harder than the material of the main body.

The jounce bumper is removably attached to the top mount through a movable retaining element housed in the fixing element retaining said fixing element in the top mount in a locking position and releasing said jounce bumper in an unlocking position.

The shock absorber assembly of the invention assures that the jounce bumper can be assembled and disassembled with respect to the top mount in a simple, quick and effective manner.

These and other advantages and features of the invention will become evident in view of the drawings and the detailed description of the invention.

### DESCRIPTION OF THE DRAWINGS

Figure 1A shows a first perspective view of a first embodiment of the shock absorber assembly according to the invention.
Figure 1B shows a second perspective view of the shock absorber assembly of the embodiment of Figure 1A.
Figure 1C shows a detail of the shock absorber assembly of Figure 1A.
Figure 1D shows a third perspective view of the shock absorber assembly of the embodiment of Figure 1A.
Figure 1E shows a first perspective view of another embodiment of the shock absorber assembly according to the invention, wherein the retaining element is in the unlocking position.
Figure 1F shows a second perspective view of the shock absorber assembly of the embodiment of Figure 1E, wherein the retaining element is in the locking position.
Figure 2A shows section A-A of the shock absorber assembly of the embodiment of Figure 1A.
Figure 2B shows a cutaway detail of the shock absorber assembly of Figure 1A, the retaining element being in the unlocking position.
Figure 2C shows a cutaway detail of the shock absorber assembly of Figure 1A, the retaining element being in the locking position.
Figure 3A shows a partial view of a cutaway perspective view of the shock absorber assembly of the embodiment of Figure 1A.
Figure 3B shows a perspective cutaway view of a detail of the shock absorber assembly of Figure 3A.
Figure 4A shows a perspective view of the top mount of the shock absorber assembly of the embodiment of Figure 1A.
Figure 4B shows a front view of the top mount of Figure 4A.
Figure 4C shows section B-B of the top mount of Figure 4A.
Figure 4D shows a perspective view of another embodiment of the top mount of the shock absorber assembly according to the invention.
Figure 5A shows a perspective view of another embodiment of the top mount of the shock absorber assembly according to the invention.
Figure 5B shows a front view of the top mount of Figure 5A.
Figure 6A shows a perspective view of the fixing element of the shock absorber assembly of the embodiment of Figure 1A.
Figure 6B shows a cutaway perspective view of the fixing element of Figure 6A, according to the direction of section C-C.
Figure 6C shows section C-C in two dimensions of the fixing element of Figure 6A.
Figure 6D shows a perspective view of another embodiment of the fixing element of the shock absorber assembly according to the invention.
Figure 7 shows a perspective view of the jounce bumper of the shock absorber assembly of the embodiment of Figure 1A.
Figure 8 shows a perspective view of the retaining element of the shock absorber assembly of the embodiment of Figure 1A.
Figure 9A shows a perspective view of another embodiment of the shock absorber assembly according to the invention.
Figure 9B shows section D-D of the shock absorber assembly of Figure 9A.
Figure 9C shows detail H of the shock absorber assembly of Figure 9A.

### DETAILED DISCLOSURE OF THE INVENTION

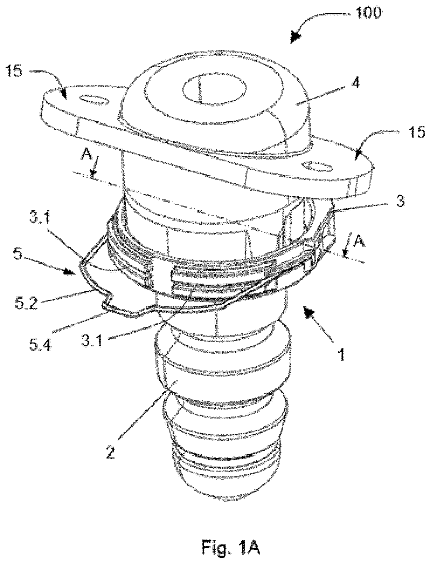

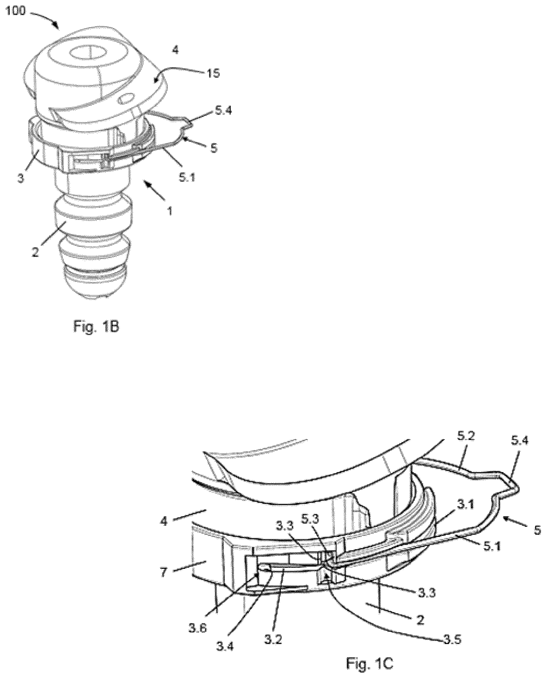

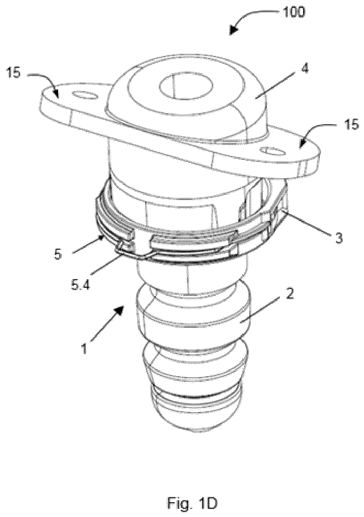

Figures 1A, 1B and 1D show the shock absorber assembly 100 according to a first embodiment of the invention. As shown in said drawings, the shock absorber assembly 100 comprises a top mount 4 and a jounce bumper 1 comprising a main body 2 manufactured in an elastic material, preferably a foam elastomer or rubber, and a fixing element 3 manufactured in a second material that is harder than the material of the main body 2.

The jounce bumper 1 is removably attached to the top mount 4 through a movable retaining element 5 which is housed in the fixing element 3. The retaining element 5 retains said fixing element 3 in the top mount 4, i.e., retains the jounce bumper 1 in a locking position, and releases said jounce bumper 1 in an unlocking position. Figures 1A and 1B show different perspective views of the shock absorber assembly 100 in the unlocking position, whereas Figure 1D shows the shock absorber assembly 100 in the locking position.

The shock absorber assembly 100 of the invention assures the jounce bumper 1 can be assembled and disassembled with respect to the top mount 4 in a simple, quick and effective manner.

Accessibility to components of the vehicles is known to be limited and to offer little visibility in vehicle assembly factories or in vehicle repair garages. With the shock absorber assembly 100 of the invention, assembly operators can readily determine where the retaining element 5 is by simply touching the shock absorber assembly 100 with their hands and can comfortably pull on it in order to release the jounce bumper 1 or to push it in order to fix the jounce bumper 1. As will be described in detail below, this fixing is a robust and reliable fixing performed in a quick and secure manner.

According to one embodiment of the invention, the top mount 4 is made of metal, for example aluminum, although it can also be manufactured in resistant plastic or any other resistant material, resistant being understood as a material the hardness of which measured on the Shore scale is within the D scale or higher. As previously discussed, the main body 2 according to the preferred embodiment of the invention is manufactured in an elastic material, preferably a foam elastomer or rubber, the hardness of which measured on the Shore scale is within the A scale or lower. The fixing element 3 of the jounce bumper 1, however, is manufactured in a material the hardness of which measured on the Shore scale is greater than the A scale, preferably being within the D scale or higher.

Therefore, since the fixing element 3 is manufactured in a material that is harder than the material of the main body 2, correct assembly of the jounce bumper 1 in the top mount 4 is assured since both parts are rigid elements, and therefore correct operation of the suspension system of the vehicle is assured.

In the preferred embodiment of the invention, the main body 2 is made of rubber or foam elastomer, preferably polyurethane foam, and the fixing element 3 is preferably made of plastic, for example a thermoplastic polymer, such as, for example, polypropylene with or without fiber, polyamide 6 with or without fiber, polyamide 66 with or without fiber, polyamide 46 with or without fiber, polyphthalamide (PPA), polybutylene terephthalate (PBT), polyethylene (PE) or a combination thereof.

During the vehicle assembly process, the suspension system is usually assembled to generate a sub-assembly which is then attached to the rest of the vehicle through the top mount 4, i.e., the suspension system is attached to the vehicle chassis through said top mount 4. It is important for the jounce bumper 1 to be placed correctly in the top mount 4 for it to work correctly.

However, when transporting vehicles to dealerships, after the final assembly of the vehicle, the jounce bumper 1 and the top mount 4 are usually decoupled and an intermediate part is usually placed between both parts so that the suspension of the vehicle does not suffer during transport, which can be done by boat, by rail or by road transport (mounted on a truck, trailer, etc.). With the shock absorber assembly 100 of the invention, the jounce bumper 1 is readily decoupled or disassembled from the top mount 4 without the risk of breaking any component of the shock absorber system.

When the vehicle reaches its destination (i.e. the required dealership), the intermediate part is removed and the jounce bumper 1 is placed back in the top mount 4, with the drawback that this time the suspension system is already anchored to the vehicle chassis and the suspension system assembled, complicating coupling operations. However, with the shock absorber assembly 100 of the invention, the jounce bumper 1 can be easily and comfortably assembled back in the top mount 4 in an effective manner, even under these conditions, as will become evident throughout the description.

As is known, the top mount 4 is used for fixing the suspension system to the vehicle chassis. To that end, the top mount 4 comprises two side projections 15 comprising holes for being able to be anchored to the chassis, which must be kept as stable as possible in order to provide the vehicle with the desired comfort. As discussed, the top mount 4 is usually metallic, for example made of steel, iron or aluminum, and is rigid enough to withstand the loads to which it is subjected. Optionally, the top mount 4 can also be made of plastic as described. In addition, the suspension system is constantly subjected to vibrations due to irregularities of the terrain, so in order to increase comfort and control of the vehicle, said system must absorb irregularities of the terrain on which said vehicle is traveling. To that end, the suspension system comprises the main body 2 which is manufactured in a foam elastomer material, preferably polyurethane foam, although it can also be made of rubber, which is more than 60% compressible, rapidly recovering its initial geometry when compressive loads cease. Said main body 2 is a very elastic but not very rigid part. In order for the suspension system to work correctly, the jounce bumper 1 must be well-positioned with respect to the top mount 4, which is assured with the shock absorber assembly 100 of the invention.

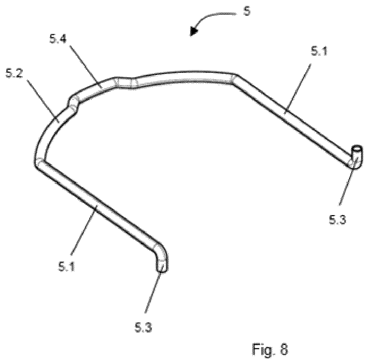

As shown in Figure 8, the retaining element 5 is a U-shaped rod, which is preferably elastic, comprising a central gripping arm 5.2 and two side retaining arms 5.1 arranged after the gripping arm 5.2. According to the preferred embodiment of the invention, the gripping arm 5.2 in turn comprises a handle-like central portion 5.4 projecting from the gripping arm 5.2, said handle 5.4 projecting from the shock absorber assembly 100 even when the retaining element 5 is arranged in the locking position, as seen in Figure 1D for example.

Said handle 5.4 favors the user being able to easily identify, by touching which their hands, where the retaining element 5 is located and to pull on it in order to raise the retaining element 5 to the unlocking position, allowing disassembly of the jounce bumper 1 in said position. Conversely, by pushing the handle 5.4 or the gripping arm 5.2, the retaining element 5 is raised to the locking position, fixing the jounce bumper 1 in said position.

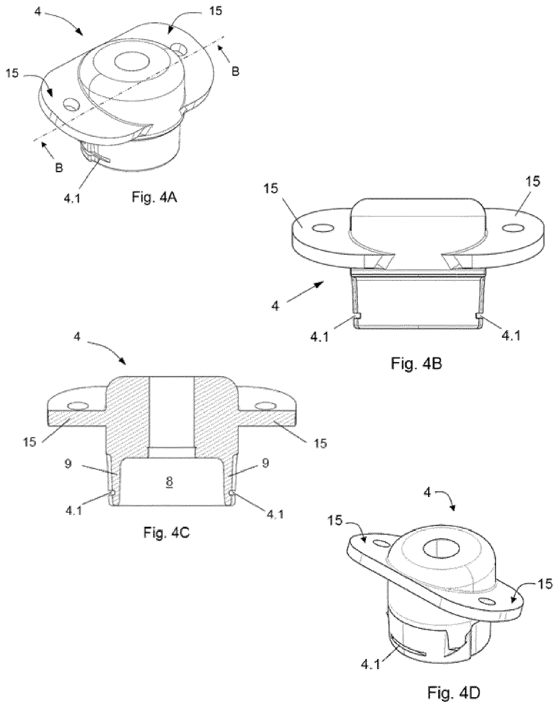

In addition, the top mount 4 according to the preferred embodiment of the invention, comprises two side grooves 4.1, as seen in Figures 4A and 4B, in which said retaining arms 5.1 are at least partially housed when the fixing element 3 is arranged in the locking position (see Figure 1 D). Said grooves 4.1 are partial grooves, each one being arranged on one side of the side wall 9 of the top mount 4, as seen in Figure 4C.

Depending on the space available in the vehicle in which the shock absorber assembly 100 of the invention is assembled, the side grooves 4.1 can be arranged such that when pulling on or pushing the retaining element 5, said retaining element 5 moves according to a direction perpendicular to the side projections 15 of the top mount 4, as shown in Figures 4A and 1A for example.

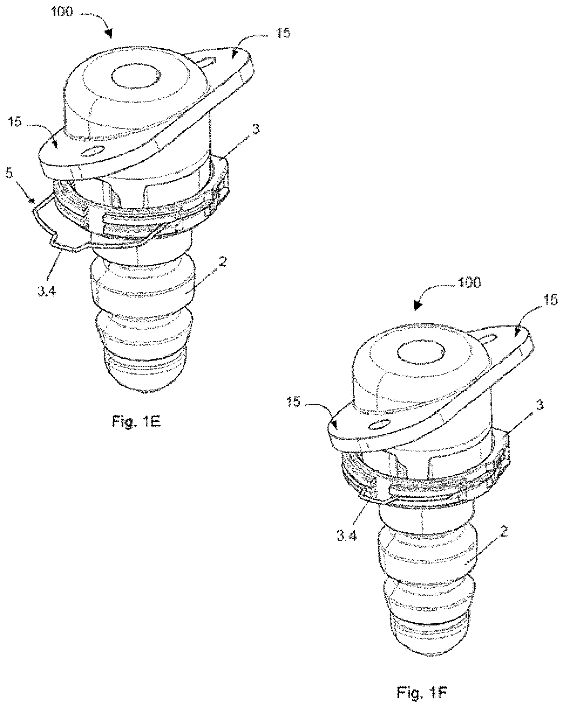

If there is no space for the retaining element 5 to move in that direction, then the side grooves 4.1 can be arranged such that when pulling on or pushing the retaining element 5, said retaining element 5 moves in the direction of the side projections 15 of the top mount 4, as shown in Figures 4D, 1E and 1F for example.

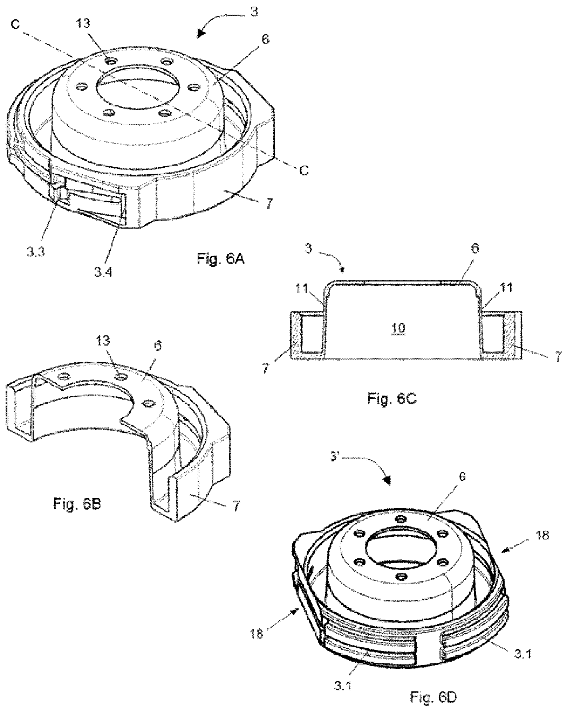

In addition, to prevent the shock absorber assembly 100 of the invention from colliding with other components of the vehicle close to said shock absorber assembly 100, the perimeter wall 7 of the fixing element 3 surrounding the central part 6 can optionally comprise two planar sides 18, as shown in Figure 6D, maintaining a minimal thickness, or it could even be missing said side walls 18.

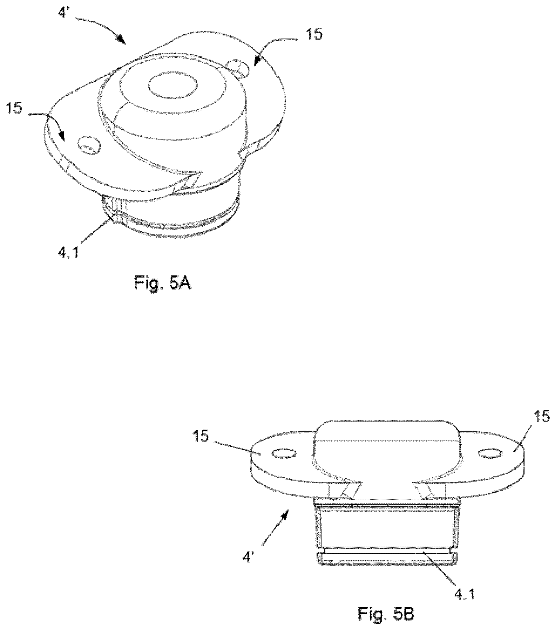

In a second embodiment of the top mount 4', where said top mount 4' comprises the same features as the described top mount 4, the side grooves 4.1 are attached to one another forming a single groove 4.1 surrounding the entire side wall 9, as shown in Figures 5A and 5B.

In any case, the groove 4.1 or each side groove 4.1 allows at least partially housing a respective retaining arm 5.1 of the retaining element 5, such that the top mount 4 or 4', according to any of the described embodiments, and the jounce bumper 1 are axially locked in the locking position, as will be described in detail below.

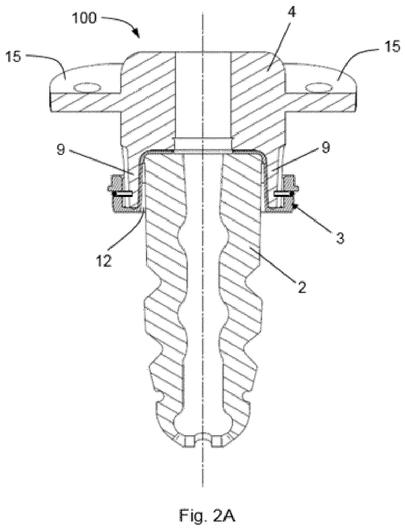

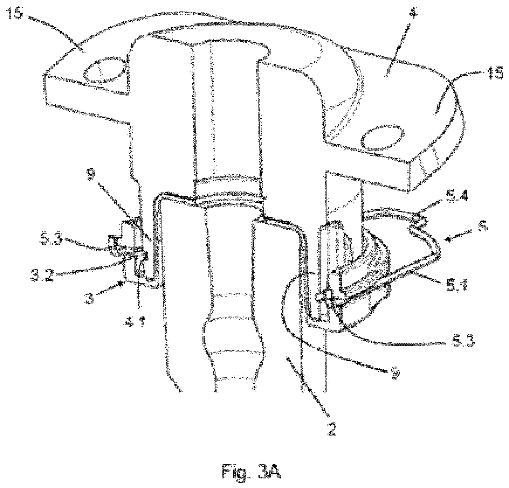

The fixing element 3 of the preferred embodiment of the invention comprises a cup-shaped central part 6, as seen in Figure 6A, which internally has a cavity 10 surrounded by a wall 11 (see Figures 6B and 6C) that can house at least part of the main body 2, preferably the upper part, as shown in Figures 3A or 2A.

The main body 2 according to the preferred embodiment of the invention is overmolded on the fixing element 3. As seen in Figure 6A, the upper area of the central part 6 of the fixing element 3 comprises a plurality of holes 13 that allow the passage of a portion of the material of the main body 2 such that a thin coat 14, enough to cover the material of the fixing element 3, covers at least part of the outer area of the cup-shaped part 6. The main body 2 is therefore mechanically attached to the fixing element 3 though there is no chemical bond between both parts 2 and 3.

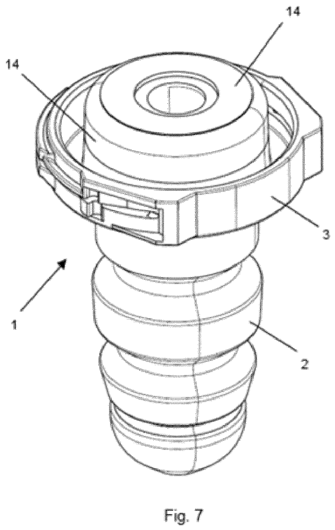

In the preferred embodiment of the invention, said thin coat 14 can cover the upper part of the cup-shaped part 6 as well as at least part of the wall 11 of said cup-shaped part 6, as seen in Figure 7, which is advantageous for preventing unwanted noises during use of the shock absorber assembly 100, as will be explained below.

Optionally, a primer coat, i.e. a primer agent, can be previously applied to the fixing element 3 in specific areas to make it easier to attach the fixing element 3 and the main body 2, wherein said specific areas are non-deforming areas or minimally deforming areas. The fixing element 3, with the primer coat, is introduced into a mold and then the main body 2 is molded over the fixing element 3. During the curing step of the main body 2, the areas of the fixing element 3 with the primer coat react with the material of said main body 2, both parts 2 and 3 being attached by said areas.

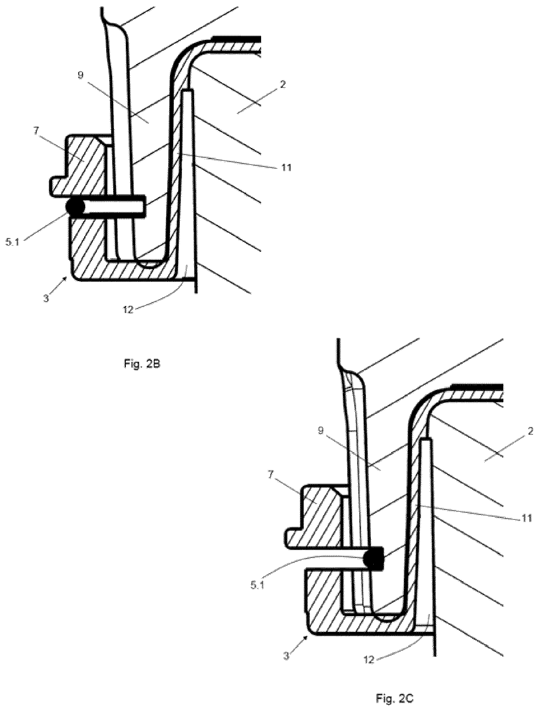

In the preferred embodiment of the invention, there is a gap 12 between the main body 2 and the inner cavity 10 of the fixing element, as seen in Figures 2A, 2B or 2C, such that the main body 2 is also able to deform radially as it is compressed during use.

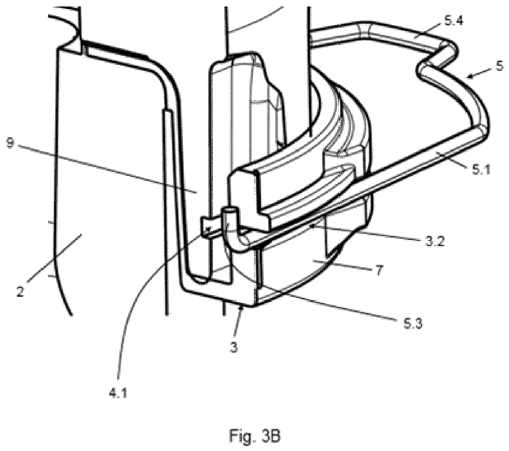

The fixing element 3 according to the preferred embodiment of the invention also comprises a perimeter wall 7 surrounding the central part 6 (see Figures 6A, 6B or 6C), the retaining element 5 being housed in said perimeter wall 7, as seen in Figures 1A, 1B, 1C, 1D, 3A or 3B.

The perimeter wall 7 of the fixing element 3 according to the preferred embodiment of the invention comprises at least one groove for housing the retaining element 5, which in turn comprises a first groove portion 3.1 in which the gripping arm 5.2 is housed when the retaining element 5 is arranged in the locking position (see Figure 1 D), and a second groove portion 3.2 on each side of the first portion 3.1, a respective retaining arm 5.1 being housed in each second portion 3.2, both in the locking position and in the unlocking position. According to the preferred embodiment of the invention, each retaining arm 5.1 is housed in the second respective groove portion 3.2 in the locking position, as seen in Figure 1D. However, in the unlocking position, a portion of each retaining arm 5.1, i.e. the portion adjacent to the respective stop 5.3, is still housed in the respective second groove portion 3.2, whereas another portion is cantilevered, as can be seen in Figures 1A and 1B or in the detail of Figure 1C.

Each retaining arm 5.1 of the retaining element 5 according to the preferred embodiment of the invention comprises a respective stop 5.3 at its free end, as shown in Figure 8.

According to the preferred embodiment of the invention, said stops 5.3 of the retaining arms 5.1 are configured by means of bending the ends of said retaining arms 5.1. As seen in Figure 8, each stop 5.3 is bent in opposite directions to compensate for stresses and prevent the rotating element 5 from rotating when it is pulled on or pushed.

The perimeter wall 7 of the fixing element 3 according to the preferred embodiment of the invention comprises a respective abutting wall 3.3 for each stop 5.3 of the retaining element 5, such that said abutting walls 3.3 prevent the retaining element 5 from being taken out of the fixing element 3 in the unlocking position, i.e., they prevent the retaining element 5 from coming out of its housing when moved from the locking position to the unlocking position.

Said abutting walls 3.3 also fix the unlocking position of the retaining element 5 and retain the retaining element 5 in said position until the user pushes said retaining element 5 to move it to the locking position.

The abutting walls 3.3 of the fixing element 3 according to the preferred embodiment of the invention are arranged in a respective housing 3.5 the side walls of which constitute the abutting elements 3.3 of each stop 5.3 of the retaining element 5. Said respective housing 3.5 is arranged in a segment of the second groove portion 3.2 of the fixing element 3 in a direction perpendicular to it, as seen in Figure 1C. Therefore, in the unlocking position each stop 5.3 of the retaining element 5 is housed in a respective housing 3.5 of the fixing element 3.

In addition, the perimeter wall 7 of the fixing element 3 according to the preferred embodiment of the invention also comprises another abutting wall 3.4 arranged in a respective housing 3.6 for each retaining arm 5.1 of the retaining element 5, said housing 3.6 being arranged at the end, i.e., at the end of the corresponding second groove portion 3.2. Said abutting walls 3.4 fix the locking position of the retaining element 5.

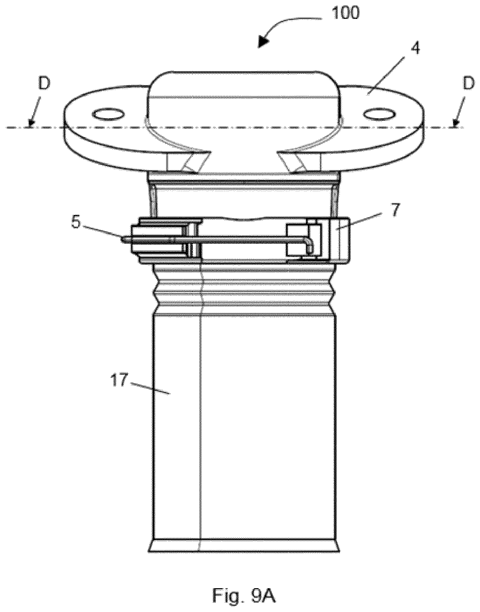

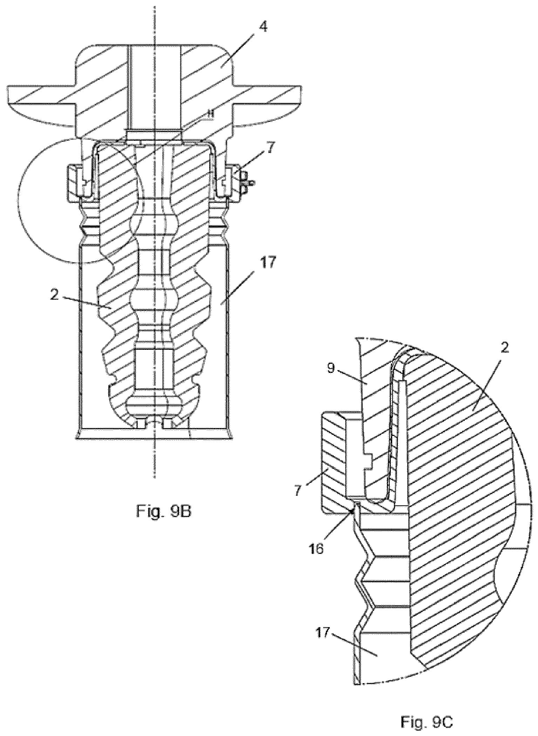

Optionally, the jounce bumper 1 can comprise a protective case 17 covering the main body 2 of the jounce bumper 1, as seen in Figure 9A, which is housed in a housing 16 arranged in the lower part of the fixing element 3, as shown in Figures 9B or 9C. The main body 2 is therefore completely covered between the fixing element 3 and the protective case 17, therefore, any dirt coming off the wheels of the vehicle is prevented from adhering to the main body 2, preventing said main body 2 from becoming damaged and thus from causing a premature breakage when the main body 2 is compressed during use.

As seen in the detail of Figure 9C, the case 17 can comprise at least one bellows-shaped portion, preferably a portion close to the end which is housed in the housing 16 of the fixing element 3, such that the case 17 is provided with sufficient flexibility to adapt to running conditions, for example to adapt to the shock absorber assembly 100 being arranged according to a degree of inclination with respect to the ground and the vehicle moving up and down according to a vertical direction during road travel.

Said case 17 is preferably made of plastic, for example polypropylene, although other materials are not ruled out.

The case 17 can be attached to the fixing element 3 using known methods, such as gluing, welding, or by mechanical fitting, for example press fitting.

Advantageously, said case 17 is arranged below the retaining element 5, so handling the jounce bumper 1 is not hindered, i.e., the jounce bumper 1 can still be loosened or fixed when needed.

Said case 17 is useful in prolonging the service life of the main body 2 since it is protected, the risk of unwanted foreign bodies being able to damage the main body 2 being eliminated.

Since the jounce bumper 1 comprises the fixing element 3, the material of which is more rigid than that of the main body 2, allows placement of the protective case 17 without affecting the final size of the shock absorber assembly 100, i.e., the case 17 does not project beyond the maximum diameter of the jounce bumper 1 that is bound by the maximum diameter of the fixing element 3, preventing the shock absorber assembly 100 from colliding with adjacent parts within the vehicle.

The top mount 4 or 4' according to any of the described embodiments comprises an enclosure 8 (see Figure 4C), which is preferably cylindrical and preferably arranged in the lower area, for housing at least one portion of the central part 6 of the fixing element 3 as shown in Figure 2A.

The coat 14, which is made of the same material as the main body 2 covering the central part 6 of the fixing element 3, prevents friction between two rigid elements, the top mount 4 or 4' and the fixing element 3, and therefore bothersome noises caused by friction between both parts during use of the shock absorber assembly 100 are prevented.

Said enclosure 8 is surrounded by a side wall 9 such that at least part of said side wall 9 is arranged between the perimeter wall 7 and the central part 6 of the fixing element 3, as shown in Figures 3A or 3B for example.

The side grooves 4.1 of the top mount 4 or 4' according to any of the embodiments are arranged in said side wall 9 such that each side groove 4.1 is facing the respective second groove portion 3.2 of the fixing element 3, as can be seen in Figures 2B, 2C, 3A and 3B.

In the unlocking position, a portion of each retaining arm 5.1 of the retaining element 5 is housed in a respective second groove portion 3.2 of the fixing element as has been described. In said position the retaining element 5 is in an extended state, i.e., the separation between the retaining arms 5.1 is greater than the separation of said arms 5.1 in standby, and therefore the retaining arms 5.1 do not access the side wall 9 of the top mount 4 or 4', see Figure 2B for example.

However, in the locking position, see Figure 2C for example, the retaining element 5 is at resting state such that the retaining arms 5.1 enter the fixing element 3 until being housed in a respective side groove 4.1 of the top mount 4 or 4', thereby preventing axial movement between the top mount 4 or 4' and the jounce bumper 1.

According to the preferred embodiment of the invention, the retaining element 5 is made of plastic or steel, preferably stainless steel; it is therefore considered a rigid element. To prevent bothersome noises due to friction between rigid elements, the retaining element 5 can be at least partially covered or protected by a material that absorbs vibrations and the possible noise resulting from said vibration.

In the preferred embodiment of the invention, the retaining element 5 is covered by a layer of plastic, preferably thermoplastic urethane, commonly referred to as TPU. Preferably said coat is applied by dipping, although other techniques are not ruled out.

Alternatively, the retaining element 5 can comprise a protective plastic case, for example made of elastomer, for the purpose of eliminating the dipping process.

In a non-limiting example, the retaining arms 5.1 can be covered with said absorbent material. Optionally, the gripping arm 5.2 could also be covered with said material.

The invention also relates to the suspension system of a vehicle comprising a shock absorber, not shown in the drawings, with its corresponding rod. As discussed, the shock absorber assembly 100 according to any of the embodiments of the invention is assembled on said rod and is then attached to the chassis of the vehicle through the side projections 15 of the top mount 4 or 4'. The suspension system also comprises the remaining components required for said suspension system to work, such as springs for example (not shown in the drawings).

## Claims

1. Shock absorber assembly of a suspension system of a vehicle, comprising a top mount (4; 4') and a jounce bumper (1) comprising a main body (2) manufactured in an elastic material and a fixing element (3; 3') manufactured in a second material that is harder than the material of the main body (2), **characterized in that** the jounce bumper (1) is removably attached to the top mount (4; 4') through a movable retaining element (5) housed in the fixing element (3; 3') retaining said fixing element (3; 3') in the top mount (4; 4') in a locking position and releasing the jounce bumper (1) in an unlocking position.

2. Device according to claim 1, wherein the retaining element (5) is a rod comprising a gripping arm (5.2) and two side retaining arms (5.1), and the top mount (4; 4') comprises two side grooves (4.1) in which said retaining arms (5.1) are at least partially housed when the fixing element (3; 3') is arranged in the locking position.

3. Device according to claim 2, wherein the retaining element (5) is made of plastic or steel, preferably stainless steel.

4. Device according to claim 3, wherein said retaining element (5) is at least partially covered by a material that absorbs vibrations and/or the noise resulting from said vibration.

5. Device according to any of claims 2 to 4, wherein the fixing element (3; 3') comprises a cup-shaped central part (6) and a perimeter wall (7) surrounding said central part (6), the retaining element (5) being housed in said perimeter wall (7).

6. Device according to claim 5, wherein the perimeter wall (7) of the fixing element (3; 3') comprises a groove, said groove comprising a first portion (3.1) in which the gripping arm (5.2) is housed when the retaining element (5) is arranged in the locking position, the gripping arm (5.2) preferably comprising a central portion (5.4) projecting in said locking position, and a second portion (3.2) on each side of the first portion (3.1), at least one portion of a respective retaining arm (5.1) being housed in each second portion (3.2).

7. Device according to claim 6, wherein each retaining arm (5.1) of the retaining element (5) comprises at its free end a respective stop (5.3), the perimeter wall (7) of the fixing element (3; 3') comprising a respective abutting wall (3.3) for each stop (5.3) of the retaining element (5), the abutting walls (3.3) preventing the retaining element (5) from being taken out of the fixing element (3; 3') and said abutting walls (3.3) setting the unlocking position of the retaining element (5).

8. Device according to claim 7, wherein the stops (5.3) of the retaining arms (5.1) are configured by means of bending the ends of said retaining arms (5.1).

9. Device according to claim 7 or 8, wherein the abutting walls (3.3) of the fixing element (3; 3') are arranged in a respective housing (3.5) arranged in the respective second portion (3.2) in which each stop (5.3) of the retaining element (5) is housed in the unlocking position.

10. Device according to any of claims 7 to 9, wherein the perimeter wall (7) of the fixing element (3; 3') comprises another abutting wall (3.4) arranged in a respective housing (3.6) for each retaining arm (5.1) of the retaining element (5) arranged at one end of the second portion (3.2), said abutting walls (3.4) setting the locking position of the retaining element (5).

11. Device according to any of claims 2 to 10, wherein the jounce bumper (1) comprises a protective case (17) covering the main body (2) of the jounce bumper (1) and housed in a housing (16) arranged in the lower part of the fixing element (3; 3').

12. Device according to any of claims 2 to 11, wherein the top mount (4; 4') comprises an enclosure (8), preferably cylindrical and preferably arranged in the lower area, for housing at least part of the central part (6) of the fixing element (3; 3'), said compartment (8) comprising a side wall (9), at least part of said side wall (9) being arranged between the perimeter wall (7) and the central part (6), the side grooves (4.1) of the top mount (4; 4') being arranged in said side wall (9).

13. Device according to claim 12, wherein the top mount (4) comprises two partial grooves (4.1) each one being arranged on one side of the side wall (9).

14. Device according to claim 13, wherein the side grooves (4.1) of the top mount (4') are attached to one another forming a single groove surrounding the entire side wall (9).

15. Suspension system of a vehicle, comprising a shock absorber with its corresponding rod, **characterized in that** it also comprises a shock absorber assembly according to any of the preceding claims.
